# EUROPEAN PATENT SPECIFICATION

(11) **EP 2 777 889 B1**
(45) Date of publication and mention of the grant of the patent: **08.05.2019**
(21) Application number: 14158466.4
(22) Date of filing: 10.03.2014
(51) Int. Cl.: B25F 5/00, B25B 21/00, F16H 61/02

(54) **Electric power tool**
Elektrisches Werkzeug
Outil électrique

(30) Priority: 12.03.2013 JP 2013049630
(43) Date of publication of application: 17.09.2014
(73) Proprietor: Panasonic Intellectual Property Management Co., Ltd., Osaka-shi, Osaka 540-6207 (JP)
(72) Inventor: Tsuruta, Naoki, Chuo-ku, Osaka 540-6207 (JP); Iwamura, Norihiro, Chuo-ku, Osaka 540-6207 (JP); Ikeda, Masaki, Chuo-ku, Osaka 540-6207 (JP)
(74) Representative: Appelt, Christian W.

(56) References cited:
- EP-A2- 2 030 710
- EP-A2- 2 404 688

## Description

The present invention relates to an electric power tool.

An electric power tool that outputs rotation force includes a motor serving as a drive source, a speed reducing mechanism, a control unit, and a gearshift actuator. The speed reducing mechanism includes a plurality of planetary gears, and changes the speed reduction ratio by switching the planetary gears that are engaged with a central sun gear. Japanese Laid-Open Patent Publication No. 2012-30347 discloses an example of a conventional electric power tool. The electric power tool of Japanese Laid-Open Patent Publication No. 2012-30347 stops or reduces the rotation produced by the motor to limit the impact when switching the speed reduction ratio of the speed reducing mechanism. The electric power tool recovers the rotation of the motor after switching the speed reduction ratio. Thus, the electric power tool includes a detector that detects the switching of the planetary gears. The rotation force of the gearshift actuator is converted to a movement force by a gear and transmitted to the speed reducing mechanism. The speed reducing mechanism detects the switching of the planetary gears by detecting the amount of a movable portion that is moved by the movement force. Thus, the speed reducing mechanism including the detector has a complicated structure. Further, the electric power tool described in Japanese Laid-Open Patent Publication No. 2012-30347 includes a detector that detects a rotation position of the gearshift actuator. The electric power tool refers to the detected rotation position to determine the switching of the speed reduction ratio.

In the detector that detects the rotation position of the gearshift actuator, the detection of the detector varies when changes occur in the coupling condition of a gear that couples the rotation shaft of the gearshift actuator to the speed reducing mechanism. The conventional detector that detects the rotation position of the gearshift actuator does not take into consideration such changes in the coupling condition of the coupling gear. Thus, the electric power tool may erroneously function when detecting the switching of planetary gears in the speed reducing mechanism. Accordingly, there is still room for improvement to the structure that detects switching of the speed reduction ratio from the detected drive amount of the gearshift actuator.

Document EP 2 404 688 A2 discloses an electric power tool, in which the speed reduction mechanism includes an axially slidable changeover member and a gear member.

Document EP 2 030 710 A2 discloses a power tool in which the control system is coupled to the gear transmission mechanism for detecting an operating characteristic of the power tool to actuate a ring gear to automatically move from the high speed position to the low speed position and to reduce the rotational speed of the ring gear when the operating characteristic exceeding a predetermined value.

It is an object of the present invention to provide an electric power tool that correctly determines the switching of the speed reduction ratio.

One aspect of the present invention is an electric power tool that outputs a drive force. The electric power tool includes a motor. A gearshift portion reduces a rotation speed related with torque of the motor in accordance with a speed reduction ratio. A switching drive force generator generates a switching drive force for switching the speed reduction ratio of the gearshift portion. A switching drive force output unit outputs drive force for switching the speed reduction ratio of the gearshift portion based on the drive force generated by the drive force generating portion. A detector outputs a detection voltage corresponding to a drive condition of the switching drive force generator. A control unit includes a determination threshold. The control unit controls rotation produced by the motor based on a comparison of the detection voltage output from the detector and the determination threshold. The control unit corrects at least one of the determination threshold and the detection voltage based on the detection voltage output by the detector.

Preferably, the control unit corrects the determination threshold based on at least one of a maximum value of the detection voltage output from the detector and a minimum voltage of the detection voltage output from the detector.

Preferably, the control unit corrects the detection voltage of the detector based on comparison information of a predetermined drive condition of the switching drive force generator and an output voltage of the detector and based on at least one of a maximum value of the detection voltage and a minimum value of the detection voltage.

Preferably, the control unit corrects the determination threshold based on a maximum value of the detection voltage output by the detector, a minimum value of the detection voltage, and a comparison of the maximum value of the detection voltage and the minimum value of the detection voltage.

Preferably, the switching drive force generator includes a switching drive motor. The detector includes a variable resistor having a resistance varied in accordance with the rotation of the switching drive motor.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a side view showing a first embodiment of an electric drill driver from which a portion of a housing is removed;
Fig. 2 is a schematic diagram of a gearshift unit in the electric drill driver of the first embodiment;
Fig. 3 is a front view of the electric drill driver of the first embodiment;
Fig. 4 is a schematic diagram of a detector in the electric drill driver of the first embodiment;
Fig. 5 is a perspective view of a variable resistor in the electric drill driver of the first embodiment;
Fig. 6 is a graph showing the relationship of the rotation angle and the detection voltage of the detector in the electric drill driver of the first embodiment;
Fig. 7 is a graph showing the relationship of the rotation angle and the detection voltage of the detector during a speed reduction ratio switching operation performed by the electric drill driver of the first embodiment;
Fig. 8A is a diagram showing the rotation range of a rotor when an output gear and a coupling gear are engaged at a predetermined position;
Fig. 8B is a diagram showing the rotation range of the rotor when the position where the output gear and the coupling gear are engaged is shifted in a direction that switches the gearshift unit to a low gear;
Fig. 8C is a diagram showing the rotation range of the rotor when the position where the output gear and the coupling gear are engaged is shifted in a direction that switches the gearshift unit to a high gear;
Fig. 9 is a graph showing the relationship of the rotation angle and the detection voltage of the detector when the engagement of the output gear and the coupling gear is shifted in the electric drill driver of the first embodiment;
Fig. 10 is a graph showing the relationship of the rotation angle and the detection voltage of the detector and the correction of a determination threshold when the engagement of the output gear and the coupling gear is shifted in a direction that switches the gearshift unit to the high gear in the electric drill driver of the first embodiment;
Fig. 11 is a flowchart of a process for correcting the determination threshold when the engagement of the output gear and the coupling gear is shifted in the electric drill driver of the first embodiment;
Fig. 12 is a graph showing the relationship of the rotation angle and the detection voltage of the detector and the correction of the detection voltage when the engagement of the output gear and the coupling gear is shifted in a direction that switches the gearshift unit to the high gear in a second embodiment of an electric drill driver;
Fig. 13 is a flowchart of a process for correcting the detection voltage when the engagement of the output gear and the coupling gear is shifted in the electric drill driver of the second embodiment;
Fig. 14 is a graph showing the relationship of the rotation angle and the detection voltage of the detector and the correction of a determination threshold when the engaged output gear and the coupling gear is shifted by a large amount in a direction that switches the gearshift unit to the low gear in a third embodiment of an electric drill driver; and
Fig. 15 is a flowchart of a process for correcting the determination threshold when the engagement of the output gear and the coupling gear is shifted in the electric drill driver of the third embodiment.

### First Embodiment

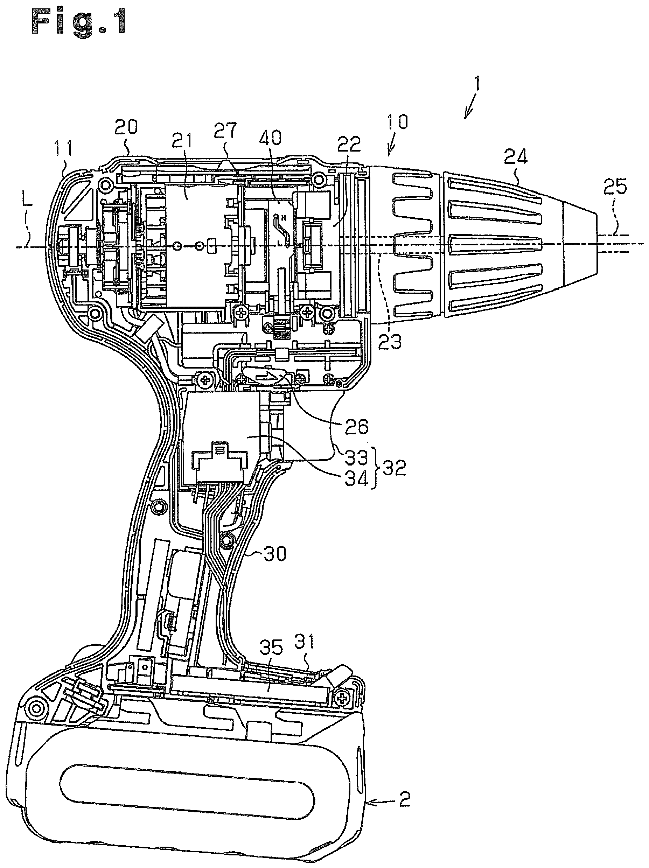

The structure of an electric drill driver 1 serving as an electric power tool will now be described with reference to Fig. 1. Fig. 1 shows the electric drill driver 1 from which a portion of a housing is removed.

The electric drill driver 1 includes a driver main body 10 and a battery pack 2. The battery pack 2 is attached in a removable manner to the driver main body 10. A housing 11, which forms the shell of the driver main body 10, includes a body portion 20 and a grip portion 30. The driver main body 10 includes a battery pack seat 31 formed at the lower end of the grip portion 30. The battery pack 2 is attached to the battery pack seat 31.

The battery pack 2 incorporates a plurality of rechargeable battery cells.

The body portion 20 includes a motor 21, a gearshift unit 40, and a power transmission mechanism unit 22.

The motor 21 is driven by power supplied from the battery pack 2. The motor 21 includes rotation shaft extending along the axis L of the body portion 20. The motor 21 may be, for example, a brush motor or a brushless motor.

The gearshift unit 40 outputs the torque produced by the motor 21 to the power transmission mechanism unit 22. The gearshift unit 40 also reduces the speed of the rotation produced by the torque. The gearshift unit 40 is capable of varying the speed reduction ratio.

The power transmission mechanism unit 22 transmits the rotation, of which the speed has been reduced by the gearshift unit 40, to a driver drive shaft 23. The driver drive shaft 23 is coupled to a rotation output unit 24 located at a distal end of the body portion 20. The rotation output unit 24 implements a chuck function. A bit 25 is attached in a removable manner to the distal end of the rotation output unit. Thus, the bit 25 is rotated with the rotation output unit 24 at the speed that has been reduced by the gearshift unit 40.

As shown in Fig. 1, the grip portion 30 includes a trigger switch 32 located at the front side slightly below where the body portion 20 is connected, that is, the position corresponding to the forefinger of the hand when a user holds the grip portion 30. The trigger switch 32 is operated by the user when driving the electric drill driver 1. The trigger switch 32 includes a trigger lever 33 and a switch 34 that goes ON and OFF in accordance with the operation of the trigger lever 33 in the grip portion 30. The switch 34 outputs a signal having a value corresponding to the pulled amount of the trigger lever 33.

The electric drill driver 1 includes a rotating direction switching lever 26 in the vicinity of where the body portion 20 and the grip portion 30 are coupled to each other. The rotating direction switching lever 26 is operated by the user when switching the rotation of the rotation output unit 24 between forward rotation and reverse rotation. For example, the rotating direction switching lever 26 may be moved to a forward rotating position when rotating the rotation output unit 24 in the forward direction and a reverse rotating position when rotating the rotation output unit 24 in a reverse position. The rotating direction switching lever 26 can also be switched to a neutral position when the rotation output unit 24 is not rotated in any direction.

A speed reduction ratio switch 27 is arranged on the upper surface of the body portion 20. The speed reduction ratio switch 27 is operated by the user when switching the speed reduction ratio of the gearshift unit 40. The speed reduction ratio switch 27 allows for the selection of automatic speed or a fixed speed reduction ratio, which sets the rotation speed of the rotation output unit 24. The speed reduction ratio switch 27 is, for example, a slide switch movable toward the front and rear between positions corresponding to three drive modes, namely a high speed low torque drive mode that uses a high (H) gear, a low speed high torque drive mode that uses a low (L) gear), and an automatic speed drive mode (AUTO). The speed reduction ratio switch 27 outputs a signal corresponding to the selected drive mode.

The grip portion 30 includes a control unit 35 in the battery pack seat 31. The control unit 35 is electrically connected to the motor 21, the trigger switch 32, the rotating direction switching lever 26, and the speed reduction ratio switch 27. The control unit 35 controls the entire electric drill driver 1 including the rotation of the motor 21. When the user pulls the trigger lever 33, the control unit 35 drives and rotates the motor 21 in the rotating direction corresponding to the position of the rotating direction switching lever 26. The control unit 35 controls the speed reduction ratio of the gearshift unit 40 in accordance with the position of the speed reduction ratio switch 27. The rotation output unit 24 rotates at a speed corresponding to the control of the control unit 35.

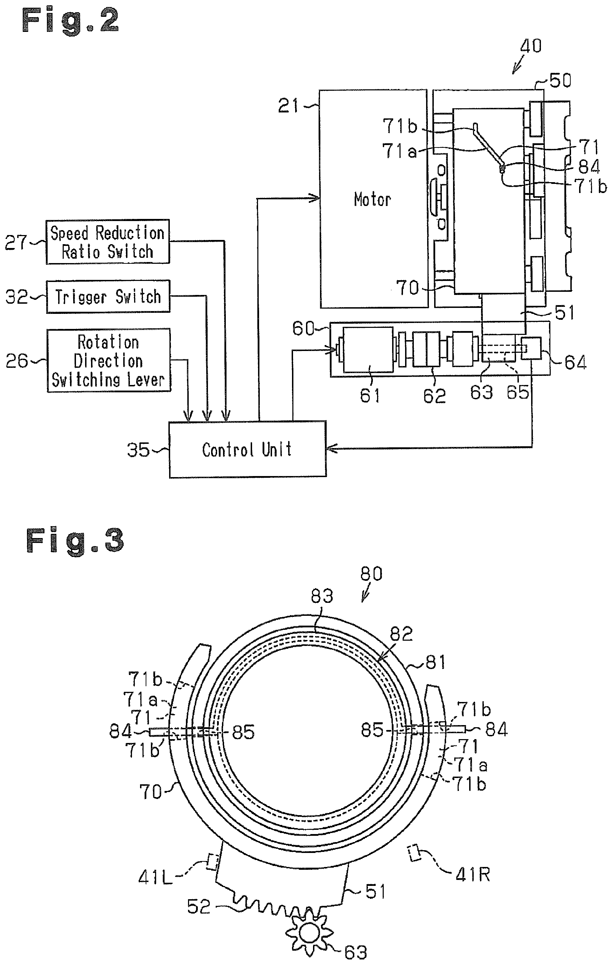

The structure of the gearshift unit 40 will now be described with reference to Fig. 2.

The gearshift unit 40 includes a gearshift mechanism 50 and a gearshift actuator 60 serving as a speed reduction ratio switching unit.

The gearshift mechanism 50 includes a gearshift cam plate 70, a coupling gear 51, and a gearshift portion 80 (Fig. 3). The gearshift cam plate 70 includes a cam groove 71.

The gearshift actuator 60 includes a gearshift motor 61 serving as a switching drive force generator, a speed reduction unit 62, an output gear 63 serving as a switching drive force output unit, and a detector 64.

In the gearshift actuator 60, the gearshift motor 61 outputs torque when switching the speed reduction ratio of the gearshift unit 40. The speed of the rotation produced from the torque of the gearshift motor 61 is reduced by the speed reduction unit 62 and transmitted to the output gear 63. The output gear 63 is engaged with a coupling rack 52 of the coupling gear 51 in the gearshift mechanism 50 (see Fig. 3). The output gear 63 outputs a switching drive force that pivots the coupling rack 52.

When switching the speed reduction ratio of the gearshift unit 40, the output gear 63 is rotated in a forward or reverse direction when the torque of the gearshift motor 61 drives the coupling gear 51.

The gearshift cam plate 70 is pivoted back and forth within a predetermined angular range when the coupling gear 51 is driven. The speed reduction ratio of the gearshift unit 40 is switched in accordance with the rotation of the gearshift cam plate 70.

The structure of the gearshift mechanism 50 will now be described with reference to Fig. 3.

The gearshift cam plate 70 has the form of a half-cut cylinder in which a portion of the circumference is cut away so as to be arcuate when viewed from one end. The coupling gear 51 is fixed to the gearshift cam plate 70. The gearshift cam plate 70 is pivotal about the axis of a ring gear 83.

The gearshift portion 80 of the gearshift mechanism 50 includes a cylindrical transmission case 81 and a gearshift mechanism section 82 accommodated in the transmission case 81. The gearshift mechanism section 82 includes, for example, three stages of planetary gear mechanisms. Fig. 3 only shows the ring gear 83 of the gearshift mechanism section 82.

The ring gear 83 of the gearshift mechanism section 82 includes a ring gear teeth portion enageable with gears of the gearshift mechanism section 82. The gearshift mechanism section 82 allows for switching between two speed reduction ratios by moving the ring gear 83 in an axial direction (left and right direction in Fig. 2) of the driver drive shaft 23 (Fig. 1) of the driver main body 10 to engage a certain gear. The electric drill driver 1 has two speed reduction ratios, namely, the speed reduction ratio set by the high gear and the speed reduction ratio set by the low gear.

As shown in Figs. 2 and 3, two cam grooves 71 are formed near the two circumferential ends of the gearshift cam plate 70. Each cam groove 71 includes an operating section 71a and holding sections 71b. The operating section 71a extends in a direction inclined relative to the circumferential direction of the gearshift cam plate 70. The holding sections 71b are continuous with the two ends of the operating section 71a and substantially extend in the circumferential direction.

As shown in Fig. 3, the ring gear 83, which is accommodated in the transmission case 81 to be movable in the axial direction of the driver drive shaft 23, includes supports 84. Each support 84 is inserted through one of two slide holes 85 in the transmission case 81 from the inner side and fitted to a corresponding one of the two cam grooves 71.

When the coupling gear 51 is pivoted by the rotation of the output gear 63 of the gearshift actuator 60, the supports 84 of the ring gear 83 move in the axial direction of the driver drive shaft 23 along the cam grooves 71 of the gearshift cam plate 70. The ring gear 83 moves with the supports 84. Thus, when the coupling gear 51 is pivoted, the gearshift mechanism section 82 switches the gear engaged with the ring gear 83. This changes the speed reduction ratio of the gearshift unit 40.

The gearshift unit 40 includes a left stopper 41L and a right stopper 41R. The left stopper 41L and the right stopper 41R set the pivoting range of the gearshift cam plate 70. In the gearshift unit 40, the left stopper 41L and the right stopper 41R contact one of the two end faces of the coupling gear 51 in the pivoting direction. When the gearshift cam plate 70 is pivoted in the clockwise direction as viewed in Fig. 3, the left end face of the coupling gear 51 comes into contact with the left stopper 41L. This restricts further pivoting of the gearshift cam plate 70 from the position of Fig. 3. In this case, the ring gear 83 is located at a first engagement position. When the gearshift cam plate 70 is pivoted in the counterclockwise direction from the position of Fig. 3, the right end face of the coupling gear 51 as viewed in Fig. 3 comes into contact with the right stopper 41R. This restricts further pivoting of the coupling gear 51 from the position where the coupling gear 51 contacts the right stopper 41R. In this case, the ring gear 83 is located at a second engagement position.

When the ring gear 83 is located at the first engagement position, the speed reduction ratio of the gearshift unit 40 is set by the high gear. When the ring gear 83 is located at the second engagement position, the speed reduction ratio of the gearshift unit 40 is set by the low gear.

When the electric drill driver 1 is operated in the automatic speed mode, the control unit 35 detects the load torque applied to the bit 25, which is attached to the rotation output unit 24, and executes automatic speed control to switch the speed reduction ratio of the gearshift unit 40 based on the detected load torque. The control unit 35 stops rotation or reduces the rotation speed of the motor 21 to minimize impact when switching the speed reduction ratio of the gearshift unit 40. The control unit 35 recovers the rotation of the motor 21 when the switching of the speed reduction ratio is completed.

The control unit 35 detects the completion of the switching operation of the speed reduction ratio based on the position of the ring gear 83. The position of the ring gear 83 is obtained from the rotation amount of an output gear shaft 65 that drives the output gear 63 of the gearshift actuator 60. This allows the detector 64 to detect the completion of the switching operation by detecting the rotation amount of the output gear shaft 65. The detector 64 detects the rotation amount of the output gear shaft 65 and outputs a detection result to the control unit 35.

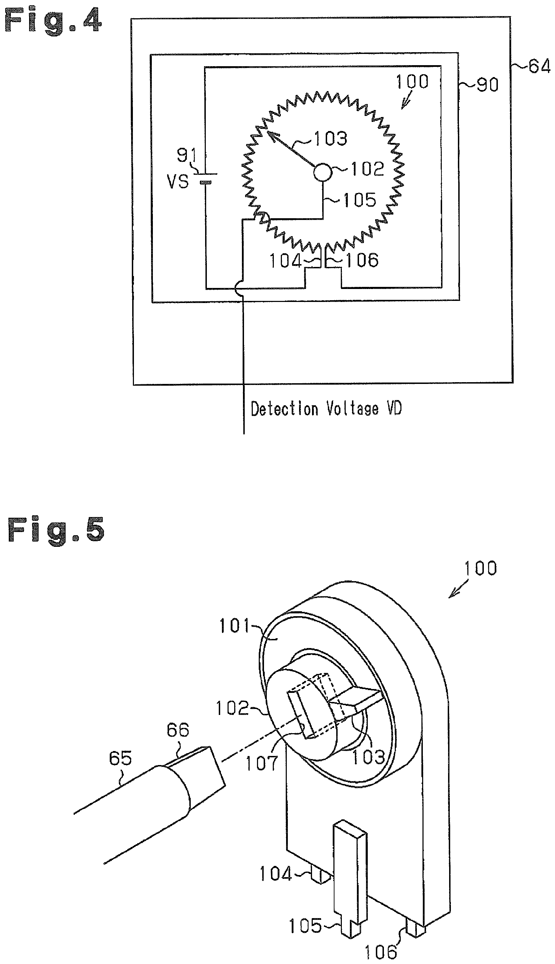

The structure of the detector 64 will now be described with reference to Fig. 4.

The detector 64 includes a voltage converter 90 formed by a variable resistor 100. The voltage converter 90 converts the rotation amount of the output gear shaft 65 to voltage and outputs the voltage. Fig. 4 shows the variable resistor 100 as an equivalent circuit.

The structure of the variable resistor 100 will now be described with reference to Fig. 5.

The variable resistor 100 includes a resistor body 101, a rotor 102, a movable piece 103, a first terminal 104, a second terminal 105, and a third terminal 106. The resistor body 101 is annular. The resistor body 101 includes one end connected to the first terminal 104 and another end connected to the third terminal 106. The rotor 102 of the variable resistor 100 is rotatable. When the rotor 102 is rotated, the movable piece 103 is pivoted integrally with the rotor 102. The movable piece 103 is electrically connected to the resistor body 101. When the rotor 102 rotates, the location changes where the movable piece 103 is connected to the resistor body 101. The movable piece 103 is also electrically connected to the second terminal 105.

The output gear shaft 65 that drives the output gear 63 of the gearshift actuator 60 has a distal end 66 fitted to a rotor groove 107 in the rotor 102 of the variable resistor 100. When the output gear shaft 65 is rotated, the rotor 102 of the resistor body 101 rotates with the output gear shaft 65.

As shown in Fig. 4, the voltage converter 90 supplies an input voltage VS from between the first terminal 104 and the third terminal 106, which are connected to the two ends of the resistor body 101 in the variable resistor 100. In the variable resistor 100, the potential at the movable piece 103 is varied by the rotation angle of the rotor 102. The variable resistor 100 outputs the potential of the movable piece 103 to the second terminal 105. The voltage converter 90 outputs the voltage at the second terminal 105 to the control unit 35 as a detection voltage VD. The voltage of the second terminal 105, which is the detection voltage VD, is proportional to the rotation angle of the output gear shaft 65 that drives the output gear 63 of the gearshift actuator 60. Accordingly, the detector 64 outputs the detection voltage VD based on the drive condition of the gearshift motor 61.

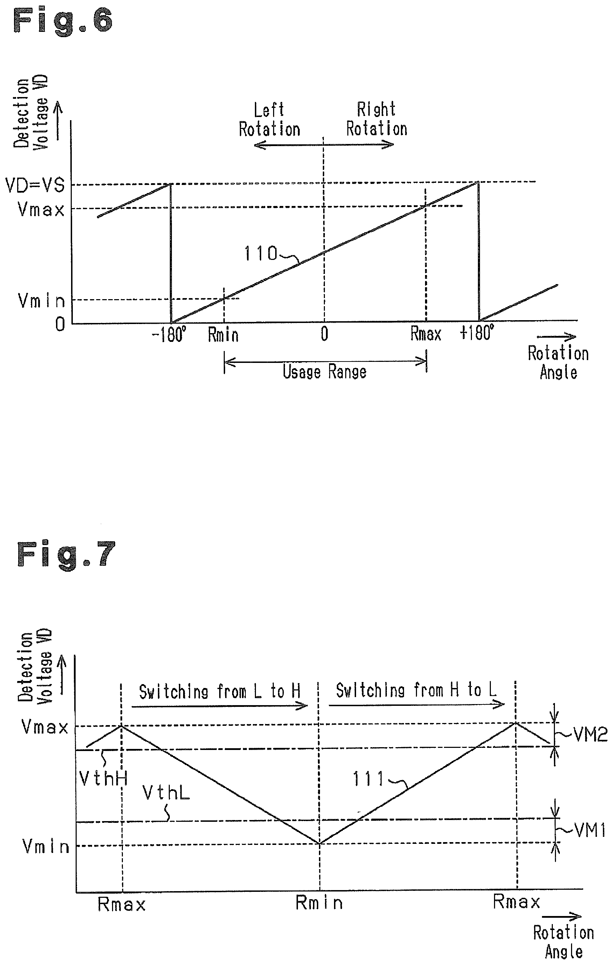

The relationship of the rotation angle of the output gear shaft 65 and the detection voltage VD of the voltage converter 90 will now be described with reference to Fig. 6. The rotation angle of the output gear shaft 65 is equal to the rotation angle of the rotor 102 of the variable resistor 100.

The X axis of Fig. 6 indicates the rotation angle when the rotor 102 of the variable resistor 100 is rotated toward the right and left. The rotation angle of the rotor 102 based on a condition in which the movable piece 103 is located at the middle of the resistor body 101 where the rotation angle is set to zero. The rotation angle takes a positive value when the movable piece 103 is rotated toward the right and a negative value when the movable piece 103 is rotated toward the left. As illustrated by line 110, when the rotor 102 is rotated toward the right, the detection voltage VD becomes maximal when the rotation angle is +180 degrees. The maximum value of the detection voltage VD is equal to the input voltage VS of a voltage input unit. When the rotor 102 is rotated toward the left, the detection voltage VD becomes minimal when the rotation angle is -180 degrees. The minimum value of the detection voltage VD is zero.

When the rightward rotation angle exceeds +180 degrees, the detection voltage VD is equal to a value of when the rotation angle increases from -180 degrees. When the leftward rotation angle exceeds -180 degrees, the detection voltage VD is equal to a value of when the rotation angle decreases from +180 degrees. That is, when the rightward rotation angle exceeds +180 degrees, the detection voltage VD increases in the same manner as when the rotation angle increases from -180 degrees. When the leftward rotation angle exceeds -180 degrees, the detection voltage VD decreases in the same manner as when the rotation angle decreases from +180 degrees.

The gearshift actuator 60 is operated based on the range of the rotation angle (e.g., values indicated by Rmin to Rmax) used by the detector 64. The rotation angle Rmax corresponds to the position shown in Fig. 2 in which the left end of the coupling gear 51 is in contact with the left stopper 41L of the gearshift unit 40. In this case, the speed reduction ratio of the gearshift unit 40 is set by the low gear. When the rotation angle is Rmax, the detection voltage VD is output as Vmax. The rotation angle Rmin corresponds to the position in which the right end of the coupling gear 51 is in contact with the right stopper 41R of the gearshift unit 40. In this case, the speed reduction ratio of the gearshift unit 40 is set by the high gear. When the rotation angle is Rmin, the detection voltage VD is output as Vmin.

The relationship of the rotation angle of the rotor 102 and the detection voltage VD when switching the speed reduction ratio of the gearshift unit 40 will now be described.

The X axis in Fig. 7 indicates the rotation angle that changes from Rmax to Rmin and then returns to Rmax.

When the control unit 35 detects a load torque applied to the bit 25 and switches the speed reduction ratio of the gearshift unit 40, the control unit 35 stops the rotation of the motor 21 and starts to drive the gearshift actuator 60. When switching the gearshift unit 40 from the low gear to the high gear, the rotation angle is changed from Rmax to Rmin. The detection voltage VD output by the detector 64 gradually decreases from Vmax. The control unit 35 controls the rotation of the motor 21 based on the comparison of the detection voltage VD and a determination threshold. The control unit 35 determines the detection voltage VD based on a low potential side threshold VthL, which is the determination threshold. When the detection voltage VD becomes less than the low potential side threshold VthL, the control unit 35 determines that the gearshift unit 40 has been switched to the high gear and then executes a control for recovering the rotation of the motor 21.

When switching the gearshift unit 40 from the high gear to the low gear, the control unit 35 stops the rotation of the motor 21 and starts driving the gearshift actuator 60. The rotation angle is changed from Rmin to Rmax. The detection voltage VD output by the detector 64 gradually increases from Vmin. The control unit 35 determines the detection voltage VD based on a high potential side threshold VthH. When the detection voltage VD becomes greater than the high potential side threshold VthH, the control unit 35 determines that the gearshift unit 40 has been switched to the low gear and then executes a control for recovering the rotation of the motor 21.

The low potential side threshold VthL is set to provide a low potential side voltage margin VM1 from Vmin. The high potential side threshold VthH is set to provide a high potential side voltage margin VM2 from Vmax.

The low potential side voltage margin VM1 and the high potential side voltage margin VM2 are set in accordance with the operational voltage dependency and the operational temperature dependency of the detector 64, the control unit 35, and other circuit blocks, and errors or the like of the variable resistor 100. The low potential side voltage margin VM1 and the high potential side voltage margin VM2 are, for example, set as 10% of the potential difference of Vmax and Vmin.

In the electric drill driver 1, the output voltage of the detector 64 is fluctuated not only by the circuit properties of circuit blocks but also by mechanical fluctuations produced by when the shifts occurs in the engagement of the output gear 63 of the gearshift actuator 60 and the coupling gear 51. An engagement shift of the output gear 63 and the coupling gear 51 occurs due to vibration when the electric drill driver 1 is operated, wear of mechanical components such as the gear, and assembly errors that occur during manufacturing or maintenance.

The gearshift actuator 60 rotates the output gear 63 with the gearshift motor 61 when switching the speed reduction ratio of the gearshift unit 40. The output gear 63 pivots the coupling gear 51. The output gear 63 rotates the coupling gear 51 until contacting the left stopper 41L or the right stopper 41R. Thus, a shift in the engagement of the output gear 63 and the coupling gear 51 would change the relationship of the rotation position of the output gear shaft 65 of the output gear 63 and the pivot position of the coupling gear 51. Thus, a shift in the engagement of the output gear 63 and the coupling gear 51 would change the rotation angle of the rotor 102 in the variable resistor 100 that rotates when switching the low gear and the high gear of the gearshift unit 40.

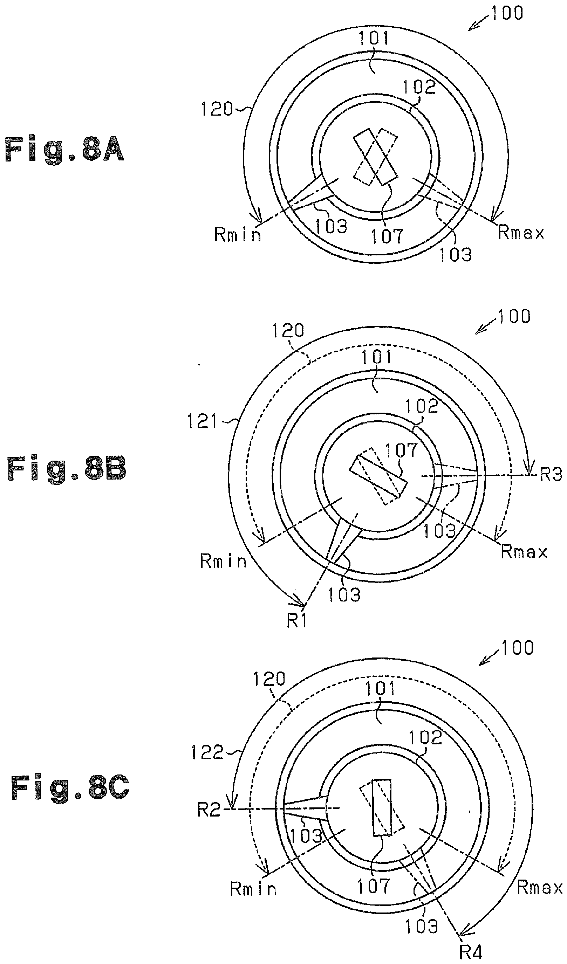

The rotation angle of the rotor 102 of the variable resistor 100 that switches the low gear and the high gear of the gearshift unit 40 will now be described with reference to Fig. 8.

As shown in Fig. 8A, when the engagement of the output gear 63 and the coupling gear 51 maintains a predetermined relationship, the rotor 102 moves the movable piece 103 between the position of angle Rmin and the position of angle Rmax as indicated by a first arc 120.

Fig. 8B shows the rotation angle of the rotor 102 when the engagement of the output gear 63 and the coupling gear 51 is shifted in the direction for switching to the low gear of the gearshift unit 40. The rotation of the rotor 102 is in the range of rotation angles R1 to R3, and the rotation angle shifts toward the Rmin side as indicated by a second arc 121.

Fig. 8C shows the rotation angle of the rotor 102 when the engagement of the output gear 63 and the coupling gear 51 is shifted in a direction for switching to the high gear of the gearshift unit 40. The rotation of the rotor 102 is in the range of rotation angles R2 to R4, and the rotation angle is shifted toward the Rmax side as indicated by a third arc 122.

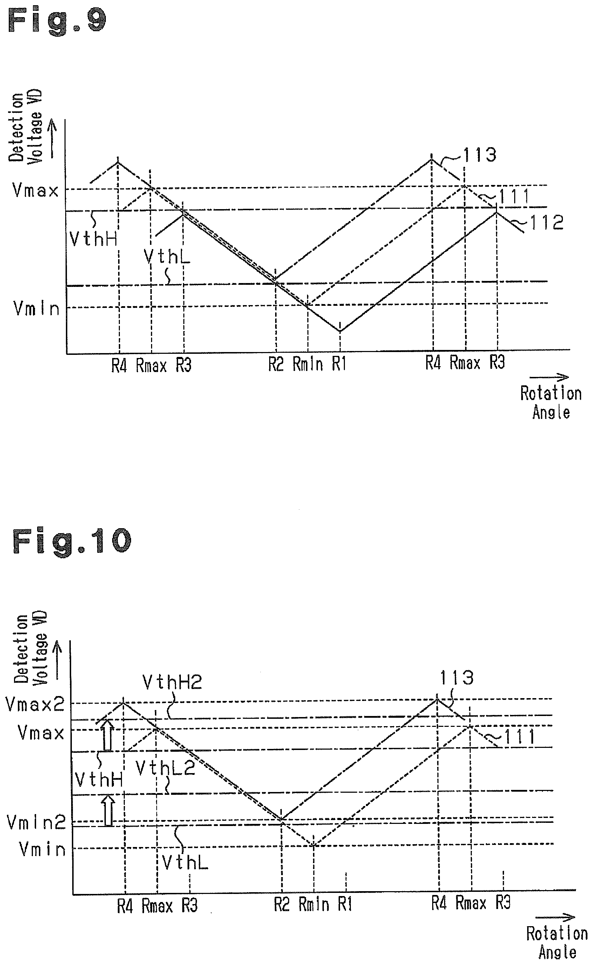

With reference to Fig. 9, the relationship of the rotation angle of the rotor 102 and the detection voltage VD when switching the speed reduction ratio of the gearshift unit 40 under a condition in which the engagement of the output gear 63 and the coupling gear 51 is shifted will now be described.

In Fig. 9, the X axis shows the changes in rotation angle that is changed from the rotation angle corresponding to the low gear to the rotation angle corresponding to the high gear and then again returned to the rotation angle corresponding to the low gear for the conditions shown in Figs. 8A, 8B, and 8C.

Line 111, which is the dotted line, indicates the relationship of the detection voltage VD relative to the rotation angle when the engagement of the output gear 63 and the coupling gear 51 shown in Fig. 7 is maintained in the predetermined positional relationship. Line 112, which is the solid line, indicates the relationship of the detection voltage VD relative to the rotation angle when the engagement of the output gear 63 and the coupling gear 51 is shifted in a direction for switching to the low gear of the gearshift unit 40.

In Fig. 8B, the rotation angle of the rotor 102 is shifted toward the Rmin side. Thus, when switching the gearshift unit 40 from the low gear to the high gear, the rotation angle is changed from R3 to R1. Furthermore, when switching the gearshift unit 40 from the high gear to the low gear, the rotation angle is changed from R1 to R3.

Line 113, which is the single-dashed line, indicates the relationship of the detection voltage VD relative to the rotation angle when the engagement of the output gear 63 and the coupling gear 51 is shifted in a direction for switching to the high gear of the gearshift unit 40. As shown in Fig. 8c, the rotation angle of the rotor 102 is shifted toward the Rmax side. Thus, when switching the gearshift unit 40 from the low gear to the high gear, the rotation angle is changed from R4 and R2. Further, when switching the gearshift unit 40 from the high gear to the low gear, the rotation angle is changed from R2 and R4.

As shown in Fig. 9, when the relationship of the detection voltage VD relative to the rotation angle for switching the gears of the gearshift unit 40 is as shown by the third line 112 and the fourth line 113, the control unit 35 cannot correctly determine the switching of gears in the gearshift unit 40. If the rotation angle is changed from R1 to R3 and the gearshift unit 40 is switched from the high gear to the low gear when the relationship of the detection voltage VD relative to the rotation angle is as indicated by the third line 112, the detection voltage VD is lower than the high potential side threshold VthH. Thus, the control unit 35 cannot determine the switching of the gearshift unit 40 from the high gear to the low gear. Thus, the control unit 35 stops without performing the control for recovering the rotation of the motor 21 that stopped when starting gear switching in the gearshift unit 40.

If the rotation angle is changed from R4 to R2 and the gearshift unit 40 is switched from the low gear to the high gear when the relationship of the detection voltage VD relative to the rotation angle is as indicated by the fourth line 113, the detection voltage VD is higher than the low potential side threshold VthL. The control unit 35 cannot determine the switching of the gearshift unit 40 from the low gear to the high gear.

When the engagement of the output gear 63 and the coupling gear 51 is shifted, the electric drill driver 1 corrects the determination threshold used for the gear switching determination of the gearshift unit 40.

The control unit 35 produces forward rotation with the gearshift motor 61 of the gearshift actuator 60 to rotate the output gear 63 until the coupling gear 51 contacts the right stopper 41R of the gearshift unit 40. The output gear shaft 65 rotates and drives the output gear 63 until the output gear 63 is stopped in the movable range. The rotation of the output gear 63 is stopped where the engaged coupling gear 51 contacts the right stopper 41R. The output gear shaft 65 of the output gear 63 rotates the rotor 102 of the variable resistor 100 when the output gear 63 rotates. The detector 64 outputs the detection voltage VD corresponding to the rotation position. The control unit 35 acquires the detection voltage VD of the detector 64 and holds the detection voltage VD as a second maximum detection voltage Vmax2.

The control unit 35 then produces reverse rotation with the gearshift motor 61 of the gearshift actuator 60 to drive the output gear 63 until the output gear 63 stops in the movable range. The rotation of the output gear 63 is stopped where the engaged coupling gear 51 contacts the left stopper 41L. The output gear shaft 65 of the output gear 63 rotates the rotor 102 of the variable resistor 100 in the reverse direction when the output gear 63 rotates. The detector 64 outputs the detection voltage VD corresponding to the rotation position. The control unit 35 acquires the detection voltage VD of the detector 64 and holds the detection voltage VD as a second minimum detection voltage Vmin.

The control unit 35 sets a second high potential side threshold VthH2 and a second low potential side threshold VthL using the second maximum detection voltage Vmax2 and the second minimum detection voltage Vmin2. The second high potential side threshold VthH2 is set, for example, so that there is a margin from the second maximum detection voltage Vmax2 that is 10% of the potential difference of the second maximum detection voltage Vmax2 and the second minimum detection voltage Vmin2. The second low potential side threshold VthL2 is set, for example, so that there is a margin from the second minimum detection voltage Vmin2 that is 10% of the potential difference of the second maximum detection voltage Vmax2 and the second minimum detection voltage Vmin2.

Fig. 10 shows the fourth line 113 indicating the relationship of the rotation angle and the detection voltage VD, the second maximum detection voltage Vmax2, the second minimum detection voltage Vmin2, the second high potential side threshold VthH2, and the second low potential side threshold VthL2. The control unit 35 corrects the second high potential side threshold VthH2 and the second low potential side threshold VthL2 to values suitable for determining the switching of the gears in the gearshift unit 40 based on the second maximum detection voltage Vmax2 and the second minimum detection voltage Vmin2.

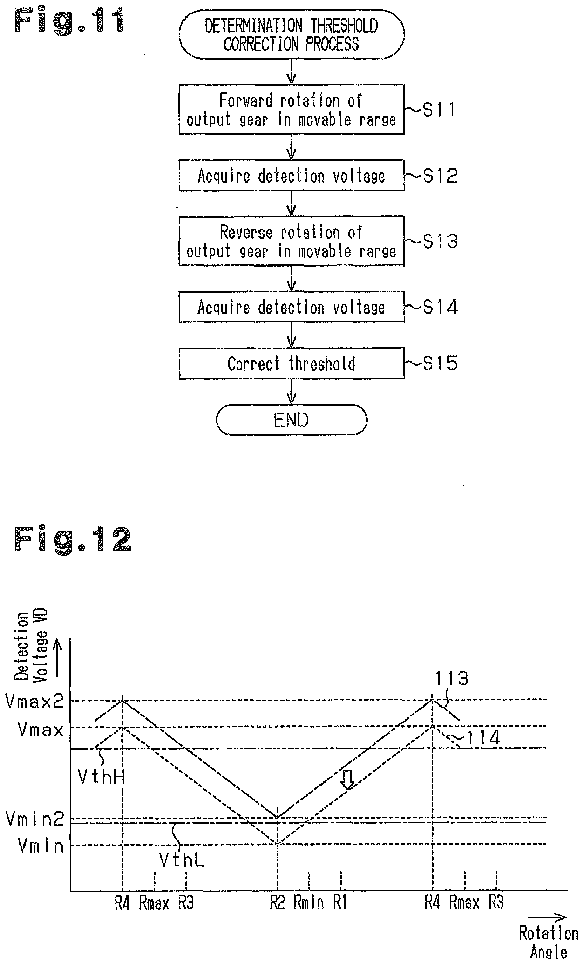

Fig. 11 shows the determination threshold correction process executed by the control unit 35.

When correcting the determination threshold, the control unit 35 sequentially executes steps S11 to S15. In step S11, the control unit 35 produces forward rotation with the gearshift motor 61 of the gearshift actuator 60 until the rotation is stopped in the movable range. In step S12, the control unit 35 acquires and holds the value of the detection voltage VD of the detector 64 as the second maximum detection voltage Vmax2. In step S13, the control unit 35 produces reverse rotation with the gearshift motor 61 of the gearshift actuator 60 until the rotation is stopped in the movable range. In step S14, the control unit 35 acquires and holds the value of the detection voltage VD of the detector 64 as the second minimum detection voltage Vmin2. In step S15, the control unit 35 corrects the determination threshold based on the values of the second maximum detection voltage Vmax2 and the second minimum detection voltage Vmin2.

The electric drill driver 1 of the present embodiment has the advantages described below.
(1) The electric drill driver 1 includes the motor 21, the gearshift unit 40, and the control unit 35. The gearshift unit 40 includes the gearshift mechanism 50 and the gearshift actuator 60. The gearshift mechanism 50 includes the coupling gear 51. The gearshift actuator 60 includes the gearshift motor 61, the output gear 63, the detector 64, and the output gear shaft 65. When switching the speed reduction ratio of the gearshift unit 40, the gearshift actuator 60 drives the gearshift motor 61. The output gear 63 receives the drive force of the gearshift motor 61 and pivots the coupling gear 51 to output a switching drive force that switches gears with the gearshift mechanism 50 of the gearshift unit 40. The detector 64 outputs the detection voltage VD based on the drive condition of the gearshift motor 61. The control unit 35 includes the determination threshold for determining the switching of the speed reduction ratio of the gearshift unit 40, and controls the rotation of the motor 21 based on the comparison of the detection voltage VD output by the detector 64 and the determination threshold. The control unit 35 acquires the maximum value and the minimum value of the detection voltage VD output by the detector 64, and corrects the determination threshold based on the maximum value and the minimum value of the detection voltage VD. IN this configuration, the detector 64 outputs the detection voltage VD corresponding to the switching operation of the speed reduction ratio of the gearshift unit 40 based on the drive condition of the gearshift motor 61. This allows the control unit 35 to correctly determine the switching operation of the speed reduction ratio of the gearshift unit 40 using the detection voltage VD of the detector 64. When the engagement of the output gear 63 and the coupling gear 51 is shifted, the determination threshold is corrected based on the detection voltage VD of the detector 64. Thus, the electric drill driver 1 is able to perform stable switching of the speed reduction ratio even when a shift occurs in the engagement of the output gear 63 and the coupling gear 51 due to vibration, wear of mechanical components such as the gear, and an assembling error.
(2) The gearshift mechanism 50 includes the coupling gear 51. The gearshift actuator 60 includes the gearshift motor 61, the output gear 63, the detector 64, and the output gear shaft 65. The output gear 63 receives the drive force of the gearshift motor 61 and pivots the coupling gear 51 to output the switching drive force for switching gears with the gearshift mechanism 50. The detector 64 outputs the detection voltage VD based on the drive condition of the gearshift motor 61. The control unit 35 includes the determination threshold for determining the switching of the speed reduction ratio of the gearshift unit 40, and controls the rotation of the motor 21 based on the comparison of the detection voltage VD output by the detector 64 and the determination threshold. The control unit 35 drives the output gear 63 in the forward direction until the output gear 63 stops in the movable range to acquire the maximum value of the detection voltage VD. Further, the control unit 35 drives the output gear 63 in the reverse direction until the output gear 63 stops in the movable range to acquire the minimum value of the detection voltage VD. The control unit 35 corrects the determination threshold based on the maximum value and the minimum value of the acquired detection voltage VD. In this configuration, the control unit 35 sets the optimum determination threshold in accordance with the operation state of the electric drill driver 1. Thus, the electric drill driver 1 determines the switching of the speed reduction ratio with satisfactory accuracy.
(3) The electric drill driver 1 includes the motor 21, the gearshift unit 40, and the control unit 35. The gearshift unit 40 includes the gearshift mechanism 50 and the gearshift actuator 60. The gearshift mechanism 50 includes the coupling gear 51. The gearshift actuator 60 includes the gearshift motor 61, the output gear 63, the detector 64, and the output gear shaft 65. The gearshift actuator 60 drives the gearshift motor 61 when switching the speed reduction ratio of the gearshift unit 40. The output gear 63 receives the drive force of the gearshift motor 61 and pivots the coupling gear 51 to output the switching drive force for switching the gearshift mechanism 50 of the gearshift unit 40. The detector 64 outputs the detection voltage VD based on the drive condition of the gearshift motor 61. In this configuration, the detector 64 detects the switching of the speed reduction ratio of the gearshift unit 40 based on the drive condition of the gearshift motor 61. Thus, the electric drill driver 1 includes a simple detector. This improves the freedom of design for the electric drill driver 1.

### Second Embodiment

A second embodiment of an electric drill driver 1 differs from the electric drill driver 1 in the points described below. To avoid redundancy, like or same reference numerals are given to those components that are the same as the corresponding components of the first embodiment. Such components will not be described in detail.

The control unit 35 in the electric drill driver 1 of the first embodiment corrects the determination threshold based on the detection voltage VD of the detector 64. The control unit 35 of the second embodiment corrects the detection voltage VD based on the detection voltage VD of the detector 64.

The relationship of the rotation angle of the rotor 102 and the detection voltage VD and the correction of the detection voltage VD in the operation of switching the speed reduction ratio of the gearshift unit 40 when the engagement of the output gear 63 and the coupling gear 51 is shifted will now be described with reference to Fig. 12.

In Fig. 12, the fourth line 113, which is the single-dashed line, indicates the relationship of the detection voltage VD relative to the rotation angle when the engagement of the output gear 63 and the coupling gear 51 shown in Fig. 10 is shifted in the direction for switching to the high gear of the gearshift unit 40.

The axis of the detection voltage VD includes the second maximum detection voltage Vmax2 and the second minimum detection voltage Vmin2 shown in Fig. 10.

The control unit 35 holds the maximum detection voltage Vmax, the minimum detection voltage Vmin, the high potential side threshold VthH, and the low potential side threshold VthL as predetermined reference values. When determining the switching of the speed reduction ratio of the gearshift unit 40 based on the detection voltage VD output from the detector 64, the control unit 35 corrects the acquired detection voltage VD. The control unit 35 corrects the value of the detection voltage VD indicated by the fourth line 113 based on the voltage difference of the second maximum detection voltage Vmax2 and the maximum detection voltage Vmax. When the detection voltage VD output by the detector 64 has a value in the fourth line 113 of Fig. 12, the control unit 35 corrects the value of the fourth line 113 to a value in a fifth line 114, which is the dotted line. The control unit 35 determines the detection voltage VD of the fifth line 114 based on the high potential side threshold VthH and the low potential side threshold VthL to determine the switching of the speed reduction ratio of the gearshift unit 40.

The value used for the correction of the detection voltage VD is not limited to the voltage difference of the second maximum detection voltage Vmax2 and the maximum detection voltage Vmax. The control unit 35 may correct the detection voltage VD based on the voltage difference of the second minimum detection voltage Vmin2 and the minimum detection voltage Vmin. Alternatively, the control unit 35 may correct the detection voltage VD based on the voltage difference of the potential difference of the second maximum detection voltage Vmax2 and the maximum detection voltage Vmax and the voltage difference of the second minimum detection voltage Vmin2 and the minimum detection voltage Vmin.

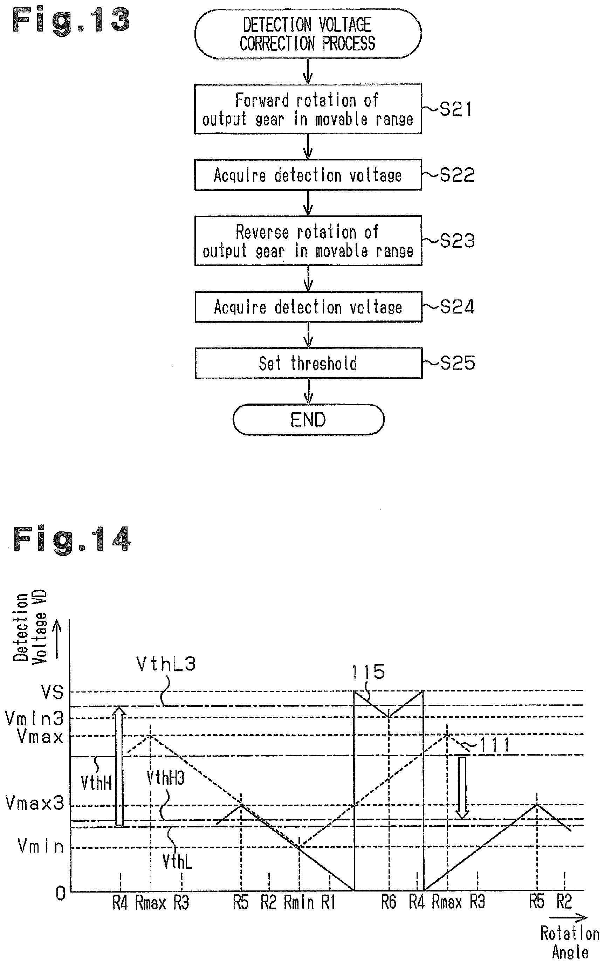

Fig. 13 shows the detection voltage value correction process executed by the control unit 35.

When correcting the detection voltage VD output by the detector 64, the control unit 35 sequentially executes steps S21 to S25.

Steps S21 to S24 are identical to steps S11 to S14 of Fig. 11. In step S25, the control unit 35 sets the correction value for the acquired detection voltage VD of the detector 64 based on the voltage difference of the second maximum detection voltage Vmax2 and the maximum detection voltage Vmax.

The electric drill driver 1 of the present embodiment has advantages (1) to (3) of the electric drill driver 1 of the first embodiment. That is, the electric drill driver 1 enable stable switching of the speed reduction ratio and determines the switching of the speed reduction ratio with satisfactory accuracy. The electric drill driver 1 also has the following advantage.

(4) The electric drill driver 1 includes the motor 21, the gearshift unit 40, and the control unit 35. The gearshift unit 40 includes the gearshift mechanism 50 and the gearshift actuator 60. The gearshift mechanism 50 includes the coupling gear 51. The gearshift actuator 60 includes the gearshift motor 61, the output gear 63, the detector 64, and the output gear shaft 65. The gearshift actuator 60 drives the gearshift motor 61 when switching the speed reduction ratio of the gearshift unit 40. The output gear 63 receiving the drive force of the gearshift motor 61 and pivots the coupling gear 51 to output the switching drive force for switching the gearshift mechanism 50 of the gearshift unit 40. The detector 64 outputs the detection voltage VD based on the drive condition of the gearshift motor 61. The control unit 35 includes the determination threshold for determining the switching of the speed reduction ratio of the gearshift unit 40, and controls the rotation of the motor 21 based on the comparison of the detection voltage VD output by the detector 64 and the determination threshold. The control unit 35 acquires the maximum value and the minimum value of the detection voltage VD output by the detector 64, and corrects the detection voltage VD used for the determination based on the maximum value and the minimum value of the detection voltage VD. In this configuration, when the engagement of the output gear 63 and the coupling gear 51 is shifted, the detector 64 corrects the detection voltage VD used for the determination based on the maximum value and the minimum value of the detection voltage VD. Thus, the control unit 35 is able to perform stable determination even if the voltage range of the operational voltage is narrow. Thus, the electric drill driver 1 performs the stable switching of the speed reduction ratio even if the voltage generated by the battery pack 2 decreases.

### Third Embodiment

A third embodiment of an electric drill driver 1 differs from the electric drill driver 1 in the points described below. To avoid redundancy, like or same reference numerals are given to those components that are the same as the corresponding components of the first embodiment. Such components will not be described in detail.

The control unit 35 in the electric drill driver 1 of the first embodiment corrects the determination threshold based on the maximum value and the minimum value of the detection voltage VD output by the detector 64. The control unit 35 of the third embodiment corrects the determination threshold based on the relationship of the drive condition of the gearshift motor 61 and the detection voltage VD output by the detector 64.

When the shift amount of the engagement of the output gear 63 and the coupling gear 51 is large, the movable range of the rotor 102 of the variable resistor 100 rotated by the output gear shaft 65 greatly shifts from the first arc 120 shown in Fig. 8A. As the movable range of the rotor 102 goes beyond the minimum angle (-180°) or the maximum angle (+180°), the detection voltage VD output by the detector 64 form a pattern in which the detection voltage VD decreases to zero starting from the minimum angle and the detection voltage VD increases from zero starting from the maximum angle.

The relationship of the rotation angle of the rotor 102 and the detection voltage VD and the correction of the determination threshold when switching the speed reduction ratio of the gearshift unit 40 for a case in which the engagement shift amount of the output gear 63 and the coupling gear 51 is large will now be described with reference to Fig. 14.

When an engagement shift of the output gear 63 and the coupling gear 51 result in the rotation angle corresponding to the low gear being R5 and the rotation angle corresponding to the high gear being R6, the relationship of the detection voltage VD relative to the rotation angle when switching the speed reduction ratio is as indicated by a sixth line 115.

When switching the low gear of the gearshift unit 40 to the high gear, the rotation angle changes from R5 to R6. The detection voltage VD gradually decreases from the value of when R5 but increases (returns) to VS when going beyond zero and then gradually decreases. When switching the high gear of the gearshift unit 40 to the low gear, the rotation angle changes from R6 to R5. The detection voltage VD gradually increases from the value of when R6 but deceases to zero (returns) when going beyond VS and then gradually increases.

As shown by the sixth line 115, the control unit 35 determines the switching of gears using the detection voltage VD in which the voltage returns during the switching operation.

The control unit 35 produces forward rotation with the gearshift motor 61 of the gearshift actuator 60 and rotates the output gear 63 until the coupling gear 51 contacts the right stopper 41R of the gearshift unit 40. The output gear shaft 65 rotates and drives the output gear 63 until the output gear 63 stops in the movable range. The rotation of the output gear 63 is stopped when the engaged coupling gear 51 contacts the right stopper 41R. The output gear shaft 65 of the output gear 63 rotates the rotor 102 of the variable resistor 100. The detector 64 outputs the detection voltage VD corresponding to the rotation position. The control unit 35 acquires and holds the detection voltage VD of the detector 64 as a third maximum detection voltage Vmax3.

Next, the control unit 35 produces reverse rotation with the gearshift motor 61 of the gearshift actuator 60 and drives the output gear 63 until the output gear 63 stops in the movable range. The rotation of the output gear 63 is stopped where the engaged coupling gear 51 contacts the left stopper 41L. The output gear shaft 65 of the output gear 63 rotates the rotor 102 of the variable resistor 100 in the reverse direction. The detector 64 outputs the detection voltage VD corresponding to the rotation position. The control unit 35 acquires and holds the detection voltage VD of the detector 64 as a third minimum detection voltage Vmin.

When the third maximum detection voltage Vmax3 becomes less than the third minimum detection voltage Vmin3, the control unit 35 uses the value of the input voltage VS to set the determination threshold. The amount of change in the detection voltage VD when switching the speed reduction ratio corresponds to the value obtained by adding the voltage difference of the input voltage VS and the third minimum detection voltage Vmin3 to the third maximum detection voltage Vmax3. The control unit 35 uses the values of the third maximum detection voltage Vmax3, the third minimum detection voltage Vmin3, and the input voltage VS to set a third high potential side threshold VthH3 and a third low potential side threshold VthL3.

The control unit 35 sets the third high potential side threshold VthH3 and the third low potential side threshold VthL3 based on the amount of change in the detection voltage VD when switching the speed reduction ratio. The control unit 35 determines the switching of the speed reduction ratio based on changes in comparisons of the detection voltage VD and the determination threshold.

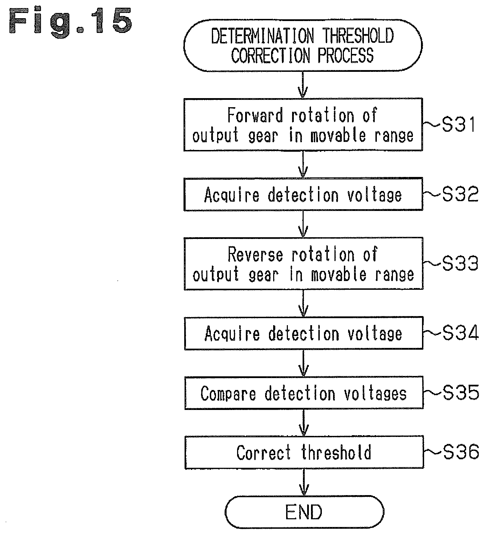

Fig. 15 shows the detection voltage value correction process executed by the control unit 35.

When correcting the detection voltage VD output by the detector 64, the control unit 35 sequentially executes steps S31 to S36.

In step S31, the control unit 35 produces forward rotation with the gearshift motor 61 of the gearshift actuator 60 until stopped in the movable range. In step S32, the control unit 35 acquires and holds the value of the detection voltage VD of the detector 64 as the third maximum detection voltage Vmax3. In step S33, the control unit 35 produces reverse rotation with the gearshift motor 61 of the gearshift actuator 60 until stopped in the movable range. In step S34, the control unit 35 acquires and holds the detection voltage VD of the detector 64 as the third minimum detection voltage Vmin3. In step S35, the control unit 35 compares the third maximum detection voltage Vmax3 and the third minimum detection voltage Vmin3. In step S35, the control unit 35 corrects the determination threshold based on the third maximum detection voltage Vmax3, the third minimum detection voltage Vmin3, and the input voltage VS when the third maximum detection voltage Vmax3 becomes less than the third minimum detection voltage Vmin3.

The electric drill driver 1 of the present embodiment has advantages (1) to (3) of the electric drill driver 1 of the first embodiment. The electric drill driver 1 also has the following advantage.

(5) The electric drill driver 1 includes the motor 21, the gearshift unit 40, and the control unit 35. The gearshift unit 40 includes the gearshift mechanism 50 and the gearshift actuator 60. The gearshift mechanism 50 includes the coupling gear 51. The gearshift actuator 60 includes the gearshift motor 61, the output gear 63, the detector 64, and the output gear shaft 65. The gearshift actuator 60 drives the gearshift motor 61 when switching the speed reduction ratio of the gearshift unit 40. The output gear 63 receives the drive force of the gearshift motor 61 and pivots the coupling gear 51 to output the switching drive force for switching the gearshift mechanism 50 of the gearshift unit 40. The detector 64 outputs the detection voltage VD based on the drive condition of the gearshift motor 61. The control unit 35 includes the determination threshold for determining the switching of the speed reduction ratio of the gearshift unit 40, and controls the rotation of the motor 21 based on the comparison of the detection voltage VD output by the detector 64 and the determination threshold. The control unit 35 acquires and compares the maximum value and the minimum value of the detection voltage VD output by the detector 64. The control unit 35 corrects the determination threshold using the maximum and minimum values of the detection voltage VD and the input voltage VS based on the comparison result. In this configuration, the detector 64 corrects the determination threshold based on the maximum and minimum values of the detection voltage VD and the input voltage VS when the shift amount of the engagement of the output gear 63 and the coupling gear 51 is large. Thus, the control unit 35 is able to perform stable determination even if the shift amount of the engagement of the output gear 63 and the coupling gear 51 is large. This improves the reliability of the electric drill driver 1 during use.

### Other Embodiments

It should be understood that the present invention may be embodied in the following forms. These forms may be combined with one another.

The control unit 35 in the electric drill driver 1 of the first to third embodiments determines the detection voltage VD output by the detector 64 based on the low potential side threshold and the high voltage side threshold. However, the control unit 35 is not limited to the contents of the first to third embodiments. For example, a control unit may determine the detection voltage VD based on a determination region having a voltage width. This allows the control unit to limit erroneous operations caused by noise or the like.

The gearshift unit 40 in the electric drill driver 1 of the first to third embodiments has two speed reduction ratios set by the high gear and the low gear. However, the gearshift unit 40 is not limited to the contents of the first to third embodiments. For example, a gearshift unit 40 may include three or more gears. The control unit 35 determines the switching of the speed reduction ratio based on a plurality of determination thresholds.

The gearshift actuator 60 in the electric drill driver 1 of the first to third embodiments outputs the switching drive force by rotating the output gear 63 with the torque of the gearshift motor 61. The gearshift actuator 60 is not limited to the contents of the first to third embodiments. For example, the gearshift actuator may include a direct-connected gearshift motor that directly outputs the switching drive force. The detector detects the directly output force as the detection voltage.

The detector 64 in the electric drill driver 1 of the first to third embodiments detects the rotation angle by rotating the rotor 102 of the rotating type variable resistor 100. Further, the detector 64 outputs the detection voltage VD. The detector 64 is not limited to the contents of the first to third embodiments. For example, the detector may slide a slide type variable resistor to detect force directly output from a direct-connected motor and output the detection voltage.

## Claims

1. An electric power tool that outputs a drive force, the electric power tool comprising:
a motor (21);
a gearshift portion (80) arranged to reduce a rotation speed related with torque of the motor in accordance with a speed reduction ratio;
a switching drive force generator (61) arranged to generate a switching drive force for switching the speed reduction ratio of the gearshift portion; and
a switching drive force output unit (63) arranged to output drive force for switching the speed reduction ratio of the gearshift portion based on the drive force generated by the drive force generating portion,
a detector (64) arranged to output a detection voltage corresponding to a drive condition of the switching drive force generator; and
a control unit (35) including a determination threshold, the electric power tool being **characterised in that** the control unit (35) is arranged to control rotation produced by the motor based on a comparison of the detection voltage (VD) output from the detector and the determination threshold, and the control unit (35) is arranged to correct at least one of the determination threshold and the detection voltage based on the detection voltage output by the detector.

2. The electric power tool according to claim 1, wherein the control unit (35) is arranged to correct the determination threshold based on at least one of a maximum value of the detection voltage output from the detector and a minimum voltage of the detection voltage output from the detector.

3. The electric power tool according to claim 1, wherein the control unit (35) is arranged to correct the detection voltage of the detector based on comparison information of a predetermined drive condition of the switching drive force generator and an output voltage of the detector and based on at least one of a maximum value of the detection voltage and a minimum value of the detection voltage.

4. The electric power tool according to claim 1, wherein the control unit (35) is arranged to correct the determination threshold based on a maximum value of the detection voltage output by the detector, a minimum value of the detection voltage output by the detector, and a comparison of the maximum value of the detection voltage and the minimum value of the detection voltage.

5. The electric power tool according to any one of claims 1 to 4, wherein
the switching drive force generator includes a switching drive motor (61); and
the detector includes a variable resistor (100) having a resistance varied in accordance with the rotation of the switching drive motor.

## Patentansprüche

1. Elektrowerkzeug, das eine Antriebskraft ausgibt, wobei das Elektrowerkzeug aufweist:
einen Motor (21);
einen Schaltabschnitt (80), der dafür ausgelegt ist, eine Drehzahl in Zusammenhang mit dem Drehmoment des Motors gemäß einem Untersetzungsverhältnis zu reduzieren;
einen Schaltantriebskraftgenerator (61), der dafür ausgelegt ist, eine Schaltantriebskraft zum Schalten des Untersetzungsverhältnisses des Schaltabschnitts zu erzeugen; und
eine Schaltantriebskraftausgabeeinheit (63), die dafür ausgelegt ist, eine Antriebskraft zum Schalten des Untersetzungsverhältnisses des Schaltabschnitts auf der Grundlage der Antriebskraft auszugeben, die von dem Antriebskrafterzeugungsabschnitt erzeugt wird,
einen Detektor (64), der dafür ausgelegt ist, eine Erfassungsspannung auszugeben, die einem Antriebszustand des Schaltantriebskraftgenerators entspricht; und
eine Steuereinheit (35), die einen Bestimmungsschwellenwert aufweist,
wobei das elektrische Elektrowerkzeug **dadurch gekennzeichnet ist, dass** die Steuereinheit (35) dafür ausgelegt ist, eine Drehung, die durch den Motor erzeugt wird, auf der Grundlage eines Vergleich der von dem Detektor ausgegebenen Erfassungsspannung (VD) und der Bestimmungsschwelle zu steuern, und die Steuereinheit (35) dafür ausgelegt ist, mindestens den Bestimmungsschwellenwert und/oder die Erfassungsspannung auf der Grundlage der von dem Detektor ausgegebenen Erfassungsspannung zu korrigieren.

2. Elektrowerkzeug nach Anspruch 1, wobei die Steuereinheit (35) dafür ausgelegt ist, den Bestimmungsschwellenwert auf der Grundlage mindestens eines Maximalwerts der von dem Detektor ausgegebenen Erfassungsspannung und/oder einer Minimalspannung der von dem Detektor ausgegebenen Erfassungsspannung zu korrigieren.

3. Elektrowerkzeug nach Anspruch 1, wobei die Steuereinheit (35) dafür ausgelegt ist, die Erfassungsspannung des Detektors auf der Grundlage von Vergleichsinformationen über einen vorbestimmten Antriebszustand des Schaltantriebskraftgenerators und einer Ausgangsspannung des Detektors und auf der Grundlage mindestens eines Maximalwertes der Erfassungsspannung und eines Minimalwertes der Erfassungsspannung zu korrigieren.

4. Elektrowerkzeug nach Anspruch 1, wobei die Steuereinheit (35) dafür ausgelegt ist, den Bestimmungsschwellenwert auf der Grundlage eines Maximalwerts der von dem Detektor ausgegebenen Erfassungsspannung, eines Minimalwerts der von dem Detektor ausgegebenen Erfassungsspannung und eines Vergleichs des Maximalwerts der Erfassungsspannung und des Minimalwerts der Erfassungsspannung zu korrigieren.

5. Elektrowerkzeug nach einem der Ansprüche 1 bis 4, wobei
der Schaltantriebskraftgenerator einen Schaltantriebsmotor (61) enthält; und
der Detektor einen variablen Widerstand (100) enthält, dessen Widerstandswert in Abhängigkeit von der Drehung des Schaltantriebsmotors variiert wird.

## Revendications

1. Outil électrique qui délivre une force d'entraînement, l'outil électrique comprenant :
un moteur (21) ;
une partie de manette (80) prévue pour réduire une vitesse de rotation liée au couple du moteur selon un rapport de réduction de vitesse ;
un générateur de force d'entraînement de commutation (61) prévu pour générer une force d'entraînement de commutation pour appliquer le rapport de réduction de vitesse de la partie de manette ; et
une unité de délivrance de force d'entraînement de commutation (63) prévue pour délivrer une force d'entraînement destinée à appliquer le rapport de réduction de vitesse de la partie de manette sur la base de la force d'entraînement générée par la partie de génération de force d'entraînement,
un détecteur (64) prévu pour délivrer une tension de détection qui correspond à une condition d'entraînement du générateur de force d'entraînement de commutation ; et
une unité de commande (35) qui comprend un seuil de détermination, l'outil électrique étant **caractérisé en ce que** l'unité de commande (35) est prévue pour contrôler la rotation produite par le moteur sur la base d'une comparaison de la tension de détection (VD) délivrée par le détecteur et du seuil de détermination, et l'unité de commande (35) est prévue pour corriger au moins l'un du seuil de détermination et de la tension de détection sur la base de la tension de détection délivrée par le détecteur.

2. Outil électrique selon la revendication 1, dans lequel l'unité de commande (35) est prévue pour corriger le seuil de détermination sur la base d'au moins l'une d'une valeur maximale de la tension de détection délivrée par le détecteur et d'une tension minimale de la tension de détection délivrée par le détecteur.

3. Outil électrique selon la revendication 1, dans lequel l'unité de commande (35) est prévue pour corriger la tension de détection du détecteur sur la base d'informations de comparaison d'une condition d'entraînement prédéterminée du générateur de force d'entraînement de commutation et d'une tension de sortie du détecteur, et sur la base d'au moins l'une d'une valeur maximale de la tension de détection et d'une valeur minimale de la tension de détection.

4. Outil électrique selon la revendication 1, dans lequel l'unité de commande (35) est prévue pour corriger le seuil de détermination sur la base d'une valeur maximale de la tension de détection délivrée par le détecteur, d'une valeur minimale de la tension de détection délivrée par le détecteur, et d'une comparaison de la valeur maximale de la tension de détection et de la valeur minimale de la tension de détection.

5. Outil électrique selon l'une quelconque des revendications 1 à 4, dans lequel
le générateur de force d'entraînement de commutation comprend un moteur d'entraînement à commutation (61) ; et
le détecteur comprend une résistance variable (100) qui possède une résistance variée selon la rotation du moteur d'entraînement à commutation.
